# EUROPÄISCHE PATENTSCHRIFT

(11) **EP 2 027 991 B1**
(45) Veröffentlichungstag und Bekanntmachung des Hinweises auf die Patenterteilung: **06.04.2011**
(21) Anmeldenummer: 08157707.4
(22) Anmeldetag: 06.06.2008
(51) Int. Cl.: B29D 30/52

(54) **Verfahren zur Herstellung eines Fahrzeugluftreifens.**
Method for manufacturing a pneumatic tyre for a vehicle.
Procédé de fabrication d'un pneu pour véhicule.

(30) Priorität: 18.08.2007 DE 102007039101
(43) Veröffentlichungstag der Anmeldung: 25.02.2009
(73) Patentinhaber: Continental Reifen Deutschland GmbH, 30165 Hannover (DE)
(72) Erfinder: Frerichs, Udo, 30855 Langenhagen (DE)
(74) Vertreter: Finger, Karsten

(56) Entgegenhaltungen:
- EP-A- 0 658 452
- EP-A- 0 881 060
- EP-A- 0 890 460
- EP-A- 1 175 992
- EP-A- 1 645 442
- GB-A- 544 757

## Beschreibung

Die Erfindung betrifft ein Verfahren zur Herstellung eines Fahrzeugluftreifens mit einem einteiligen oder einem eine Laufstreifencap und eine Laufstreifenbase aufweisenden Laufstreifen, wobei der Laufstreifen bzw. die Laufstreifencap aus einer elektrisch nicht leitfähigen Kautschukmischung hergestellt wird, und wobei durch zumindest einen aus einem elektrisch leitfähigen Material bestehenden Einsatz zwischen der Außenseite des Laufstreifen bzw. der Laufstreifencap und einer elektrisch leitfähigen Kautschukmischung im Unterbau eine elektrisch leitfähige Verbindung hergestellt wird.

Die mit der Fahrbahn in Kontakt stehenden, üblicherweise Ruß enthaltenden Laufstreifen von Fahrzeugluftreifen sind ausreichend elektrisch leitfähig, um das Ableiten von elektrostatischen Aufladungen zu ermöglichen. Ist dies, beispielsweise bei kieselsäurehaltigen Laufstreifen, nicht oder nicht ausreichend der Fall, können unangenehme Entladungsvorgänge auftreten. Kieselsäurehaltige Laufstreifen bei Fahrzeugluftreifen haben sich wegen ihrer guten Fahreigenschaften, wie geringer Rollwiderstand und gute Nassrutscheigenschaften, bewährt, wobei jedoch die erwähnte niedrige oder nicht vorhandene elektrische Leitfähigkeit eine nachteilige Eigenschaft ist, sodass gesonderte Maßnahmen zur Ableitung elektrostatischer Ladungen getroffen werden müssen.

Ein Verfahren der eingangs genannten Art ist aus der US-A-6,834,693 bekannt. Der Laufstreifen wird mit einer Extrusionsvorrichtung hergestellt, welche einen den kompletten Laufstreifen erzeugenden Hauptextruder und einen mit diesem zusammenarbeitenden Mikroextruder aufweist, welcher eine elektrisch leitfähige Kautschukmischung direkt in einen Abschnitt der unvulkanisierten und heißen Kautschukmischung, welche aus dem Hauptextruder kommt, einfügt.

Aus der US-A-6,951,233 ist ein Verfahren zur Herstellung eines Laufstreifens aus einer Laufstreifencap und einer Laufstreifenbase bekannt, welche beide aus einer elektrisch nicht leitfähigen Kautschukmischung hergestellt werden. Die Laufstreifenbase und die Laufstreifencap werden jeweils separat mit einem Extruder hergestellt, wobei in jede dieser Mischungen durch Koextrusion jeweils eine elektrisch leitfähige Kautschukmischung eingefügt wird.

Diese bekannten Verfahren sind aufwändig und erfordern besondere Extrusionseinrichtungen zur Herstellung der Laufstreifen.

Aus der EP - A - 1175992 wird ein Verfahren zur Herstellung einer Lauffläche für einen Reifen bereitgestellt, die mit einer elektrisch leitenden Schicht versehen ist, die mindestens einem der Bereiche Mittelabschnitt in Breitenrichtung und Seitenflächen eines Laufflächengummis angeordnet ist, das aus einem Gummi mit niedriger elektrischer Leitfähigkeit besteht, das sich von einer Gummischicht mit hoher elektrischer Leitfähigkeit an der inneren Umfangsseite des Laufflächengummis bis zu einer Bodenkontaktfläche der Lauffläche erstreckt, wobei das Verfahren die folgenden Schritte aufweist: - Wickeln und Auflaminieren eines unvulkanisierten Kautschukbands mit hoher elektrischer Leitfähigkeit zur Bildung der elektrisch leitenden Schicht auf dem Umfang eines Reifenmaterials, das in einer gegebenen Höhe in radialer Richtung eine Gummischicht mit hoher elektrischer Leitfähigkeit als mindestens eine äußerste Schicht in Dickenrichtung enthält, unter Drehung des Reifenmaterials, indem die Wicklungen im wesentlichen über die volle Breite des Kautschukbands miteinander in Kontakt gebracht werden, und - Aufwickeln eines unvulkanisierten Laufflächenkautschuks auf den Umfang des Reifenmaterials vor oder nach dem Aufwickeln des Kautschukbands.

Der Erfindung liegt die Aufgabe zugrunde, ein Verfahren der eingangs genannten Art zur Verfügung zu stellen, mit dem auf eine wesentlich einfachere Weise in einen elektrisch leitfähigen Laufstreifen oder Laufstreifenteil zumindest ein Einsatz aus einem elektrisch leitfähigen Material eingebracht werden kann.

Diese Aufgabe wird durch ein Verfahren nach der Lehre des Patentanspruchs 1 gelöst.

Vorteilhafte Ausgestaltungen der Erfindung sind Gegenstand der Unteransprüche.

Gelöst wird die gestellte Aufgabe erfindungsgemäß dadurch, dass ein Teil des Laufstreifens bzw. ein Teil der Laufstreifencap, insbesondere eine Hälfte, als Profil extrudiert wird, an der inneren Stirnfläche des Profils das elektrisch leitfähige Material aufgebracht wird, dieser Teil mit einem zweiten als Profil extrudierten Teil des Laufstreifens bzw. der Laufstreifencap zum kompletten Laufstreifen bzw. zur kompletten Laufstreifencap zusammengefügt wird.

Die Erfindung gestattet es auf einfache Weise, an einem extrudierten Teil des Laufstreifens oder der Laufstreifencap elektrisch leitfähiges Material anzubringen, welches im fertigen Reifen einen elektrisch leitfähigen, in Umfangsrichtung des Laufstreifens verlaufenden Einsatz bildet.

Das elektrisch leitfähige Material soll derart zur Verfügung gestellt werden, dass es auf besonders rationelle und einfache Weise aufgebracht werden kann. In diesem Zusammenhang ist es daher von Vorteil, wenn als elektrisch leitfähiges Material ein Streifen aus einer elektrisch leitfähigen Kautschukmischung angebracht wird. Alternativ dazu eignen sich auch elektrisch leitfähige Materialien, die als Paste, Lösung oder dergleichen aufgesprüht oder aufgestrichen werden, ferner auch pulver- oder granulatförmige elektrisch leitfähige Materialien, die anhaftend angebracht, beispielsweise aufgeblasen, werden.

Soll der Laufstreifen im Reifen mit einer Laufstreifenbase aus einer elektrisch leitfähigen Kautschukmischung versehen sein, steht eine weitere einfache Möglichkeit zur Verfügung, den elektrisch leitfähigen Einsatz in der Laufstreifencap zu bilden. Dazu wird das extrudierte Profil mit einer Kautschukmischungsplatte, welche die elektrisch leitfähige Laufstreifenbase mitbildet, verbunden, wobei die Mischungsplatte breiter ist als die Basis des extrudierten Profils, sodass durch ein Umschlagen des Überstandes elektrisch leitfähiges Material an der Stirnfläche des Profils angebracht wird.

Weitere Merkmale, Vorteile und Einzelheiten der Erfindung werden nun anhand der Zeichnung, die schematisch Ausführungsbeispiele darstellt, näher beschrieben. Dabei zeigen
Fig. 1 eine Ansicht eines Abschnittes eines Laufstreifens,
Fig. 2 bis 4 unterschiedliche Stadien der Herstellung eines Laufstreifens und
Fig. 5 und Fig. 6 eine zweite Verfahrensvariante anhand von unterschiedlichen Stadien bei der Herstellung eines Laufstreifens.

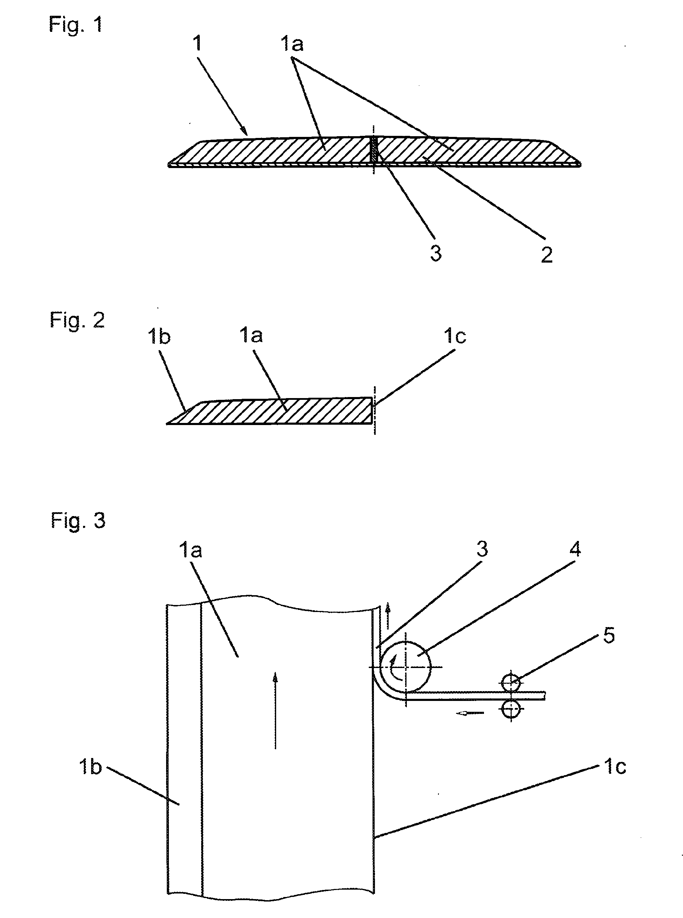

Fig. 1 zeigt einen Laufstreifen bestehend aus einer Laufstreifencap 1 und einer Laufstreifenbase 2, welche unmittelbar auf ein nicht gezeigtes Gürtelpaket oder auf eine dieses abdeckende Bandage eines Fahrzeugluftreifens aufgebracht wird. Die Laufstreifencap 1 befindet sich unmittelbar auf der Laufstreifenbase 2 und wird bei der Vulkanisation des Reifens mit einer Profilierung aus Nuten, Rillen, Einschnitten und dergleichen versehen. Die Laufstreifenbase 2 besteht aus einer als Füllstoff Ruß enthaltenden Kautschukmischung, vorzugsweise aus einer der üblichen und bekannten Basemischungen, und ist somit elektrisch leitfähig. Die Laufstreifencap 1 besteht aus einer sogenannten Silikamischung, einer Kautschukmischung, welche als Füllstoff Kieselsäure (SiO₂) und keinen oder höchsten einen sehr geringen Anteil an Ruß enthält und ist somit elektrisch nicht leitfähig.

Anstelle eines eine Cap und eine Base aufweisenden Laufstreifens kann auch ein ungeteilter Laufstreifen, ein sogenannter Monolaufstreifen, vorgesehen sein, welcher aus einer elektrisch nicht leitfähigen Silikamischung besteht. Ein Monolaufstreifen befindet sich im Reifen auf der elektrisch leitfähigen Kautschukmischung des Gürtelverbandes.

Gemäß der in Fig. 1 gezeigten Ausführungsvariante ist die Laufstreifencap 1 durch einen mittig in Umfangsrichtung umlaufenden streifenförmigen Einsatz 3 in zwei Hälften geteilt. Der Einsatz 3 besteht aus einer elektrisch leitfähigen Kautschukmischung und stellt im fertigen Reifen eine elektrisch leitfähige Verbindung zwischen der Außenfläche des Reifens, die mit dem Untergrund in Kontakt tritt, und der elektrisch leitfähigen Laufstreifenbase 2 her.

Bei der in Fig. 2 bis 4 gezeigten Ausführungsvariante wird eine Laufstreifencaphälfte 1a oder alternativ eine Monolaufstreifenhälfte als extrudiertes Profil mit einer Schulter 1b und einer vertikal zur Erstreckungsrichtung des Profils verlaufenden innenseitigen Stirnfläche 1c hergestellt. Anschließend wird auf die Stirnfläche 1c der Laufstreifencaphälfte 1a ein in seiner Breite der Höhe der Stirnfläche 1c entsprechend angepasster, elektrisch leitfähiger Kautschukmischungsstreifen 3 angebracht, wie es Fig. 3 zeigt. Die Einrichtung zum Aufbringen kann, wie es ebenfalls in Fig. 3 angedeutet ist, eine Applikationsrolle 4 und ein Paar von Führungsrollen 5 aufweisen. Zur Sicherstellung bzw. Erhöhung der Haftung kann der Streifen 3 mit einer der üblichen Haftlösungen vorbehandelt sein. Die mit dem Streifen 3 versehene Laufstreifencaphälfte 1a wird mit einer zweiten Laufstreifencaphälfte 1 a zur kompletten Laufstreifencap 1 zusammengefügt. Der zweite Teil kann dabei ebenfalls an seiner Stirnfläche mit einem Streifen 3 versehen worden sein. Dabei kann vorteilhafterweise derart vorgegangen werden, dass das mit dem Streifen 3 belegte Profil oder das unbelegte Profil in seiner Länge abgeschnitten und mit dem ursprünglichen bzw. verbleibenden Profil zusammengefügt wird.

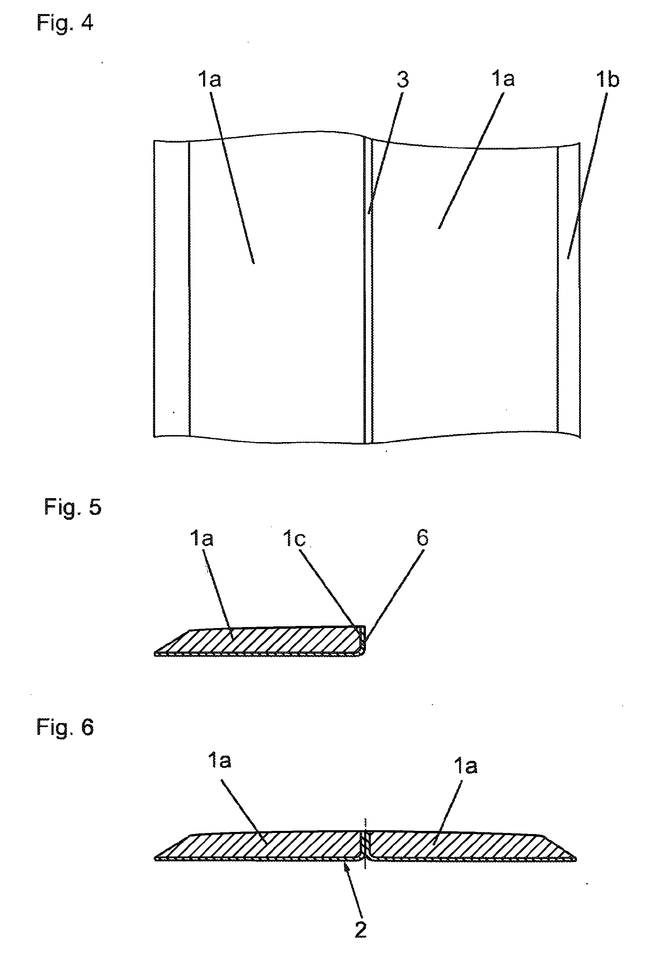

Eine Möglichkeit einer alternativen Herstellung eines Laufstreifens aus einer Laufstreifencap 1 und einer Laufstreifenbase 2 zeigen Fig. 5 und 6. Bei dieser Ausführungsvariante wird die eine Laufstreifencaphälfte 1a als Profil entsprechend extrudiert und mit einer Mischungsplatte 6, welche die spätere Laufstreifenbase 2 mitbildet, zusammengefügt. Die Mischungsplatte 6 weist eine Breite auf, die größer ist als die Basisbreite der Laufstreifencaphälfte 1a, sodass durch ein Umklappen eines Überstandes der Mischungsbahn 6 auf die innenseitige Stirnfläche 1c der Laufstreifencaphälfte 1a quasi ein Streifen aus einer elektrisch leitfähigen Mischung angefügt wird. Es können nun analog zur Ausführungsform gemäß Fig. 2 bis 4 zwei Laufstreifencaphälften 1 a zu einer ganzen Laufstreifencap zusammengefügt werden.

Der angebrachte Streifen 3 kann abweichend von dem gezeigten Querschnitt, einem schmalen Rechteck, ausgeführt sein. Der Streifen 3 kann vorvernetzt werden und beliebig eingefärbt sein. Anstelle eines Kautschukmischungsstreifens kann eine Lösung bzw. eine Paste aus einem polymeren Material mit entsprechender elektrischer Leitfähigkeit aufgesprüht, aufgestrichen oder dergleichen werden, oder es kann ein elektrisch leitfähiges Pulver oder Granulat anhaftend angebracht werden.

### Bezugszeichenliste

- 1: Laufstreifencap
- 1a: Laufstreifencaphälfte
- 1b: Schulter
- 1c: Stirnfläche
- 2: Laufstreifenbase
- 3: Streifen
- 4: Applikationsrolle
- 5: Führungsrollen
- 6: Mischungsplatte

## Patentansprüche

1. Verfahren zur Herstellung eines Fahrzeugluftreifens mit einem einteiligen oder einem eine Laufstreifencap (1) und eine Laufstreifenbase (2) aufweisenden Laufstreifen, wobei der Laufstreifen bzw. die Laufstreifencap (1) aus einer elektrisch nicht leitfähigen Kautschukmischung hergestellt wird, und wobei durch zumindest einen aus einem elektrisch leitfähigen Material bestehenden Einsatz zwischen der Außenseite des Laufstreifen bzw. der Laufstreifencap (1) und einer elektrisch leitfähigen Kautschukmischung im Unterbau eine elektrisch leitfähige Verbindung hergestellt wird,
**dadurch gekennzeichnet,**
**dass** ein Teil des Laufstreifens bzw. ein Teil (1a) der Laufstreifencap (1), insbesondere eine Hälfte, als Profil extrudiert wird, an der inneren Stirnfläche des Profils das elektrisch leitfähige Material aufgebracht wird, dieser Teil (1a) mit einem zweiten als Profil extrudierten Teil (1a) des Laufstreifens bzw. der Laufstreifencap (1) zum kompletten Laufstreifen bzw. zur kompletten Laufstreifencap (1) zusammengefügt wird.

2. Verfahren nach Anspruch 1, **dadurch gekennzeichnet, dass** als elektrisch leitfähiges Material ein Streifen (3) aus einer elektrisch leitfähigen Kautschukmischung angebracht wird.

3. Verfahren nach Anspruch 1, **dadurch gekennzeichnet, dass** das elektrisch leitfähige Material als Paste, Lösung oder dergleichen aufgesprüht oder aufgestrichen wird.

4. Verfahren nach Anspruch 1, **dadurch gekennzeichnet, dass** ein Pulver oder Granulat aus elektrisch leitfähigem Material anhaftend angebracht wird.

5. Verfahren nach Anspruch 1, **dadurch gekennzeichnet, dass** das extrudierte Profil mit einer Kautschukmischungeplatte (6), welche die elektrisch leitfähige Laufstreifenbase (2) mitbildet, verbunden wird, wobei die Mischungsplatte (6) breiter ist als die Basis des extrudierten. Profils, sodass durch ein Umschlagen des Überstandes elektrisch leitfähiges Material an der Stirnfläche (1c) des Profils angebracht wird.

## Claims

1. Method for manufacturing a pneumatic vehicle tyre having a one-part tread or a tread which comprises a tread cap (1) and a tread base (2), the tread or the tread cap (1) being produced from an electrically nonconductive rubber mixture, and an electrically conductive connection between the outer side of the tread or the tread cap (1) and an electrically conductive rubber mixture in the substructure being established by at least one insert consisting of an electrically conductive material, **characterized in that** part of the tread or part (1a) of the tread cap (1), in particular one half, is extruded as a profile, the electrically conductive material is applied to the inner end face of the profile and this part (1a) is joined together with a second part (1a) of the tread or the tread cap (1), extruded as a profile, to form the complete tread or the complete tread cap (1).

2. Method according to Claim 1, **characterized in that** a strip (3) of an electrically conductive rubber mixture is applied as the electrically conductive material.

3. Method according to Claim 1, **characterized in that** the electrically conductive material is sprayed or brushed on as a paste, solution or the like.

4. Method according to Claim 1, **characterized in that** a powder or granules of electrically conductive material is/are applied in an adhering manner.

5. Method according to Claim 1, **characterized in that** the extruded profile is bonded to a sheet of rubber mixture (6), which forms part of the electrically conductive tread base (2), the sheet of mixture (6) being wider than the base of the extruded profile, so that electrically conductive material is applied to the end face (1c) of the profile by folding over the overhang.

## Revendications

1. Procédé de fabrication d'un bandage pneumatique pour roue de véhicule qui présente une bande de roulement d'une seule pièce ou un chapeau (1) de bande de roulement et une base (2) de bande de roulement, la bande de roulement ou le chapeau (1) de bande de roulement étant réalisés en un mélange de caoutchouc électriquement non conducteur, une liaison électriquement conductrice étant établie entre au moins une garniture constituée d'un matériau électriquement conducteur et située entre le côté extérieur de la bande de roulement ou du chapeau (1) de bande de roulement et un mélange de caoutchouc électriquement conducteur prévu dans la partie sous-jacente,
**caractérisé en ce que**
une partie de la bande de roulement ou une partie (1a) du chapeau (1) de bande de roulement, en particulier une moitié, sont extrudées sous la forme d'un profilé, **en ce qu'**un matériau électriquement conducteur est appliqué sur la surface frontale intérieure du profil, **en ce que** cette partie (1a) est assemblée à une deuxième partie (la), extrudée sous la forme d'un profilé, de la bande de roulement ou du chapeau (1) de la bande de roulement, pour former la bande de roulement complète ou le chapeau (1) complet de la bande de roulement.

2. Procédé selon la revendication 1, **caractérisé en ce qu'**un ruban (3) en un mélange de caoutchouc électriquement conducteur est appliqué comme matériau électriquement conducteur.

3. Procédé selon la revendication 1, **caractérisé en ce que** le matériau électriquement conducteur est pulvérisé ou appliqué sous la forme d'une pâte, d'une solution ou similaires.

4. Procédé selon la revendication 1, **caractérisé en ce qu'**une poudre ou un granulé de matériau électriquement conducteur sont appliqués par adhérence.

5. Procédé selon la revendication 1, **caractérisé en ce que** le profilé extrudé est relié à une plaque (6) de mélange de caoutchouc qui contribue à former la base (2) électriquement conductrice de la bande de roulement et **en ce que** la plaque (6) de mélange est plus large que la base du profilé extrudé, de telle sorte qu'un matériau électriquement conducteur est appliqué sur la surface frontale (1c) du profilé par rabattement du débord.
